# FASCICULE DE BREVET EUROPEEN

(11) **EP 2 104 429 B1**
(45) Date de publication et mention de la délivrance du brevet: **23.09.2015**
(21) Numéro de dépôt: 08761780.9
(22) Date de dépôt: 17.01.2008
(51) Int. Cl.: A21C 15/00, A21D 13/00, A23L 1/00, A47J 43/00

(54) **PROCÉDÉ, APPAREIL ET SYSTÈME DE PRÉPARATION DE SANDWICHS**
VERFAHREN, VORRICHTUNG UND SYSTEM ZUR HERSTELLUNG VON SANDWICHS
METHOD, APPARATUS AND SYSTEM FOR PREPARING SANDWICHES

(30) Priorité: 19.01.2007 FR 0700379
(43) Date de publication de la demande: 30.09.2009
(73) Titulaire: Or Equip, 13790 Peynier (FR)
(72) Inventeur: ASSIUS, Yannick, 13710 Fuveau (FR)
(74) Mandataire: Marchand, André
(86) Numéro de dépôt international: PCT/FR2008/000062
(87) Numéro de publication internationale: WO 2008/107548

(56) Documents cités:
- FR-A- 2 659 942
- FR-A- 2 858 200
- FR-A1- 2 675 036
- JP-A- 6 179 083
- US-A- 4 963 377
- US-B1- 6 575 337

## Description

La présente invention est relative à un procédé de préparation de sandwichs, ainsi qu'à un appareil et à un système conçus pour la mise en oeuvre de ce procédé.

L'invention a notamment pour objet de proposer de tels procédés, aappareils et systèmes, qui permettent de fabriquer des sandwichs rapidement, à l'unité, en introduisant une garniture dans le sandwich.

Au sens de la présente demande, le terme « sandwich » devra être compris dans une acceptation large incluant notamment les sandwichs roulés (ou « wraps ») et les crêpes ; l'invention s'applique particulièrement aux sandwichs constitués d'une garniture hétérogène comportant généralement des morceaux de produits alimentaires « solides » empilés de nature variée, tels que légumes ou viandes, la garniture étant « pincée » ou enveloppée par deux portions de pâte (cuite) - également dénommées tranches - reliées / articulées entre elles.

Il est intéressant de pouvoir proposer des sandwichs préparés très rapidement et « à la demande » : outre le fait qu'un consommateur peut ainsi choisir la composition de la garniture et / ou la variété du pain (ou autre pâte), cela permet notamment d'éviter un ramollissement de la pâte 1 du pain par l'humidité des produits composant la garniture.

La préparation « à la demande » de la garniture et son introduction dans le pain, nécessitent un temps considérable lorsqu'elles sont réalisées manuellement, particulièrement lorsque la garniture n'est pas composée d'un seul morceau (tel qu'une saucisse) et / ou d'une composition pâteuse.

Il a été proposé dans le brevet FR-2 675 036 de disposer les ingrédients composant la garniture sur un support comportant une poignée, d'introduire le support portant la garniture entre deux tranches de pain, et d'extraire ensuite le support du sandwich.

Le brevet FR-2 659 942 décrit un système de préparation automatique de sandwich à partir de garnitures emballées ; l'emballage d'une garniture est formé d'une plaquette profilée solidaire d'un ou plusieurs films. Pour la préparation d'un sandwich, on fait basculer un support d'un morceau de pain pour l'aligner avec un emballage contenant la garniture, on introduit l'emballage dans le pain, on déchire une extrémité de l'emballage, on retire l'emballage en le pressant pour maintenir la garniture dans le pain.

Ces systèmes de garnissage de sandwichs et ces supports / emballages de garniture présentent des formes et structures complexes, sont délicats à mettre en oeuvre et coûteux.

Le brevet US6575337 décrit un dispositif verseur pour faire couler une préparation contenue dans un pot de cuisson, à l'intérieur d'un récipient. Le dispositif comporte une base sur laquelle peut être posé le récipient, et un support de pot monté pivotant par rapport à la base.

Un objectif de l'invention est de proposer de tels procédés, appareils et systèmes de préparation de sandwichs, et des supports de garniture, qui soient améliorés, et/ou qui remédient en partie au moins, aux lacunes ou inconvénients des procédés et appareils connus.

Selon un aspect de l'invention, il est proposé un procédé de préparation d'un sandwich par introduction d'une garniture entre deux parties (en regard mutuel) d'un morceau de pain (ou autre pâte) dans lequel :
- on dispose des éléments de garniture sur un support de garniture - également dénommé plat, lame ou palette -,
- on pose le support chargé de la garniture sur un support de plat - également dénommé sous-plat - basculant solidaire d'un poussoir ou d'une poignée,
- on engage les parties inférieure et supérieure du morceau de pain de part et d'autre - respectivement sensiblement en dessous et au dessus - du sous-plat et on actionne le poussoir pour faire basculer le support de plat - et le plat qu'il supporte - en direction d'un espace â garnir délimité par les parties inférieure et supérieure du morceau de pain, jusqu'à obtenir une inclinaison du support de garniture propre à provoquer le glissement de la garniture hors du support de garniture, dans l'espace à garnir, en maintenant le support de garniture sur le support de plat et, lorsque la garniture a été ainsi transférée dans l'espace à garnir,
- on immobilise le support de plat et on dégage le sandwich garni du support de plat et du support de garniture.

Selon un autre aspect de l'invention, il est proposé un appareil de garnissage de sandwich qui comporte un socle et un support de plat monté pivotant sur le socle entre une position sensiblement horizontale et une position inclinée (par rapport à l'horizontale), par exemple sensiblement verticale ; le support de plat est arrangé pour recevoir un support de garniture et comporte des moyens de maintien pour maintenir le support de garniture sur le support de plat lorsque ce dernier est incliné ; l'appareil comporte en outre une poussoir solidaire du support de plat pivotant.

Selon des modes préférés de réalisation de l'invention :
- l'axe de pivotement/basculement du support de plat est sensiblement horizontal ;
- bien que les moyens de maintien puissent agir par effet mécanique (par exemple sous forme d'un butée notamment) et/ou pneumatique (par exemple sous forme d'une ventouse notamment), il est particulièrement avantageux que ces moyens de maintien agissent, en partie au moins, par effet magnétique ; à cet effet, le support de plat peut comporter un aimant arrangé pour coopérer avec (attirer) un élément magnétique du support de garniture lorsque ce dernier est posé sur le support de plat.

Selon encore un autre aspect, il est proposé un support de garniture de sandwich qui est essentiellement constitué par un profilé d'un matériau magnétique, de préférence un acier inoxydable ferritique à 17% de chrome environ.

De tels supports peuvent être facilement nettoyés et réutilisés.

Selon des modes préférés de réalisation :
- le profilé comporte une base plane, qui est le cas échéant de forme allongée et prolongée par deux bords longitudinaux inclinés par rapport à la base, qui servent à retenir la garniture empilée sur la base du plat et à faciliter la préhension du support garni ;
- la face supérieure du profilé est revêtue d'une couche d'un matériau favorisant le glissement des ingrédients de la garniture, tel que le polytétrafluoroéthylène.

L'invention s'applique particulièrement au garnissage d'un pain allongé fendu longitudinalement ou d'une pâte pliée.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.
La figure 1 illustre en perspective schématique un support de garniture conformé à l'invention.
La figure 2 illustre en perspective schématique les composants essentiels d'un système selon l'invention.
Les figures 3 à 6 illustrent schématiquement des opérations successives d'un procédé selon l'invention.
La figure 7 illustre en perspective schématique un appareil selon l'invention, dans une configuration fictive correspondant à deux étapes successives de basculement d'un support de garniture.

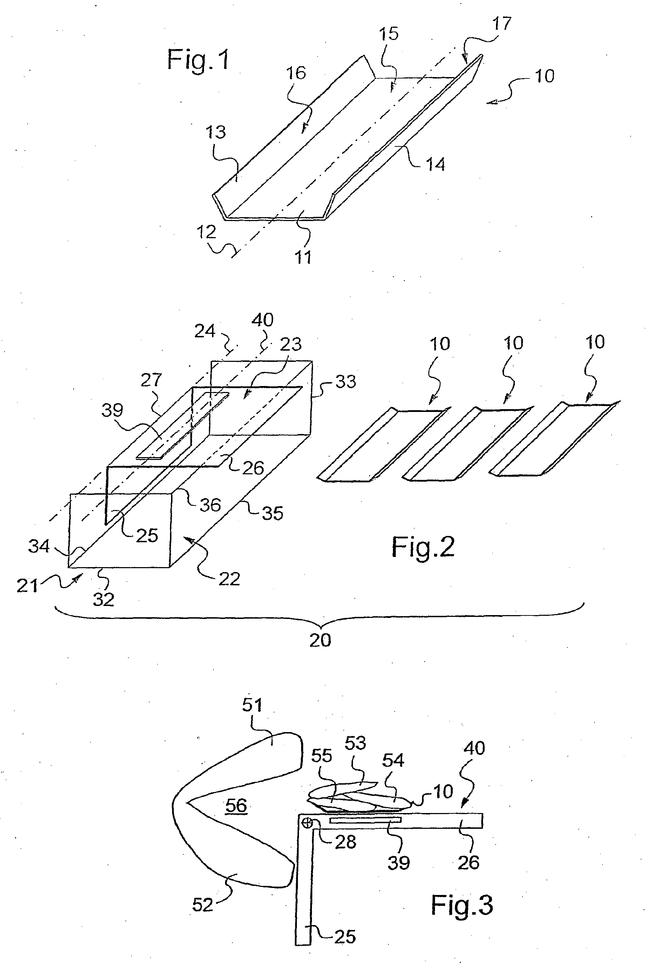

Par référence à la figure 1 notamment, un support 10 de garniture est constitué d'un profilé d'acier inoxydable contenant 17% de chrome environ et présentant une section transversale en forme générale de V évasé vers le haut : le support 10 comporte une base 11 plane rectangulaire allongée selon un axe 12 longitudinal, et deux ailes 13, 14 prolongeant la base le long de ses deux bords parallèles les plus longs ; ce support peut être obtenu par découpe et pliage dans une tôle ; les faces 15 à 17 respectives de la base 11 et des rebords 13, 14, qui sont dirigées vers le haut et appelées à être en contact avec les composants d'une garniture disposée sur le support, peuvent être revêtues de Teflon®.

La forme et les dimensions du support 10 sont respectivement adaptées à la forme et aux dimensions du sandwich à garnir ; le plat support de garniture peut notamment être en forme de disque et dénué de rebords, selon une variante de réalisation non représentée.

Par référence à la figure 2 notamment, le système 20 de préparation de sandwich conforme à l'invention se compose essentiellement d'un ou plusieurs lot(s) de plats 10 identiques et d'un appareil 21 de basculement d'un plat, qui est adapté aux plats 10 pour en recevoir au moins un et le maintenir pendant le transfert d'une garniture dans un sandwich.

Les plats sont par exemple garnis à l'avance et entreposés dans un appareil réfrigéré, de sorte que lorsqu'un client commande un sandwich, il suffit de transférer la garniture commandée dans un morceau de pain ou de pâte choisi(e) par le client, à l'aide de l'appareil 21, comme précisé ci- après.

L'appareil 21 comporte un socle 22 sur lequel un support 23 de plat est monté pivotant selon l'axe 24 horizontal.

Dans le mode de réalisation des figures 2 à 5, le support de plat est essentiellement constitué de deux plaques rectangulaires planes 25, 26 reliées en 27 par un de leurs bords longitudinaux respectifs, sensiblement le long de l'axe 24 de pivotement, pour former un dièdre droit.

Le support de plat comporte en outre deux tourillons 28, 29 alignés selon l'axe 24 ; les tourillons sont solidaires des plaques 25, 26 et sont respectivement engagés dans deux paliers 30, 31 prévus dans le socle pour permettre le pivotement du support 23 par rapport au socle 22.

Sur la figure 2, le socle 22 est schématiquement représenté sous la forme d'un treillis de barres minces formant deux cadres 32, 33 rectangulaires verticaux reliés par trois barres 34 à 36 horizontales, parallèles à l'axe 24.

Dans la configuration illustrée figures 2 et 3, la plaque du support de plat s'étend sensiblement horizontalement, reposant sur la barre supérieure 36 (figure 2) du socle 22.

La plaque 26 sert à recevoir un plat garni tandis que la plaque 25 sert de poussoir pour provoquer le basculement de l'ensemble pivotant selon l'axe 24 lorsqu'un effort adapté est exercé sur la plaque 25.

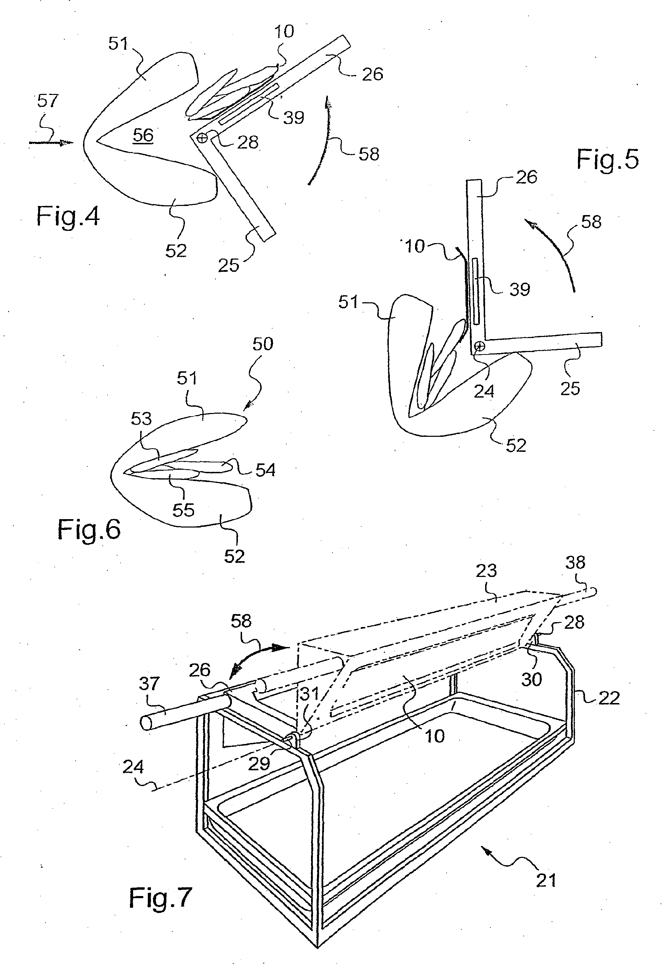

Dans la variante illustrée figure 7, le support de plat basculant comporte deux poignées 37, 38 alignées selon un axe parallèle à l'axe 24, et s'étendant de part et d'autre de la plaque support 26 ; on notera que cette figure représente « fictivement » deux ensembles basculant dans deux configurations distinctes, pour éviter une figure supplémentaire, alors que l'appareil ne comporte qu'un seul support de plat basculant selon l'axe 24.

Afin de maintenir le plat 10 sur la plaque 26 du support de plat lorsque cette plaque est fortement inclinée par rapport à l'horizontale, par exemple comme illustré figures 4 et 5, la plaque 26 est munie de moyens magnétiques de maintien du plat.

Ces moyens de maintien sont essentiellement constitués d'une bande ou d'un barreau aimanté(e) 39 s'étendant le long d'un axe horizontal 40 parallèle à l'axe 24.

La position, la forme, les dimensions, le matériau et l'aimantation de la bande / du barreau 39 sont choisis et calculés pour exercer sur le plat 10, lorsque ce plat est posé sur la plaque 26, une force d'attraction suffisante pour empêcher son glissement et sa chute lorsque la plaque 26 et le plat garni qu'elle supporte sont fortement inclinés, notamment sensiblement verticaux comme illustré figure 5.

La bande / le barreau aimanté(e) peut être sensiblement affleurant(e) sur la face supérieure 40 de la plaque 26, ou bien peut s'étendre sous cette face comme illustré figures 3 à 5.

Par référence aux figures 3 à 6 notamment, dans un procédé de préparation d'un sandwich 50 par introduction d'une garniture comportant des morceaux 53, 54, 55 empilés entre deux parties 51, 52 en regard mutuel d'un morceau de pain (cf. figure 6), on effectue successivement les opérations suivantes :
- on dispose la garniture 53 à 55 sur un plat ou palette 10 servant de support temporaire de garniture ;
- on pose le plat 10 garni sur la plaque 26 du support de plat basculant ;
- on engage les parties supérieure 51 et inférieure 52 du morceau de pain de part et d'autre de l'axe 24 de pivotement du support de plat, sensiblement au dessus et en dessous de cet axe, du plat garni et du support de plat, la partie inférieure 52 venant au contact de la plaque 25 formant poussoir et s'étendant vers le bas, sous l'axe 24 (cf. figure 3) ;
- on actionne ensuite le poussoir 25 en exerçant manuellement sur celui-ci une poussée - selon la flèche 57 - par l'intermédiaire de la partie 52 de pain ;
- ceci entraîne un basculement 58 (cf. figure 4 à 6) du support de plat et du plat garni en direction de l'espace 56 à garnir délimité par les parties supérieure et inférieure du morceau de pain ou pâte, jusqu'à obtenir (cf. figure 5) une inclinaison du plat propre à provoquer le glissement de la garniture hors du plat 10, dans l'espace à garnir, en maintenant le plat sur la plaque 26 support de plat.

Selon la nature des ingrédients de la garniture et celle du plat 10 et leur adhérence mutuelle en résultant, l'angle d'inclinaison du plat, par rapport è la position initiale horizontale, qui est nécessaire pour obtenir le transfert de la garniture par la chute des ingrédients, peut atteindre ou dépasser 45 ou 90 degrés, par exemple être situé dans une plage allant de 90 degrés environ à 180 degrés environ.

Dans la variante de la figure 7, on obtient le basculement du plat 10 par action manuelle sur les poignées 37, 38.

## Revendications

1. Procédé de préparation d'un sandwich par introduction d'une garniture entre deux parties d'un morceau de pain ou de pâte, **caractérisé en ce que** :
- on dispose une garniture (53 à 55) sur un plat (10) support de garniture,
- on pose le plat garni sur un support (23, 26) de plat basculant équipé d'un poussoir (25) ou d'une poignée (37, 38) et comportant des moyens (39) de maintien pour maintenir le plat sur le support de plat lorsque ce dernier est incliné,
- on engage les parties supérieure (51) et inférieure (52) du morceau de pain ou pâte de part et d'autre de l'axe (24) de pivotement du support de plat, et
- on actionne le poussoir, respectivement la poignée, pour faire basculer (58) le support de plat et le plat en direction d'un espace (56) à garnir délimité par lesdites parties supérieure et inférieure du morceau de pain ou pâte, jusqu'à obtenir une inclinaison du plat propre à provoquer le glissement de la garniture hors du plat, dans l'espace à garnir, en maintenant le plat sur le support de plat par les moyens de maintien.

2. Procédé selon la revendication 1 dans lequel, pour actionner le poussoir, on exerce une poussée (57) par l'intermédiaire d'une partie (52) du morceau de pain ou pâte.

3. Procédé selon l'une quelconque des revendications 1 ou 2 dans lequel l'angle d'inclinaison du plat, par rapport à la position initiale sensiblement horizontale, qui est nécessaire pour obtenir le transfert de la garniture, est situé dans une plage allant de 45 degrés environ à 180 degrés environ.

4. Appareil (21) de garnissage de sandwichs (50) par introduction d'une garniture hétérogène disposée sur un support (10) et comportant des morceaux de produits alimentaires solides empilés de nature variée, entre deux parties d'un morceau de pain ou de pâte, **caractérisé en ce qu'**il comporte :
- un socle (22),
- un support (23, 26) de plat arrangé pour recevoir un plat (10) supportant la garniture (53 à 55) et monté pivotant sur le socle entre une position sensiblement horizontale et une position inclinée, et
- un poussoir (25) ou une poignée (37, 38) solidaire du support de plat pivotant,
le support de plat comportant des moyens (39) de maintien pour maintenir le plat sur le support de plat lorsque ce dernier est incliné.

5. Appareil selon la revendication 4 dans lequel le support de plat est monté pivotant par rapport au socle selon un axe (24) sensiblement horizontal.

6. Appareil selon l'une quelconque des revendications 4 ou 5 dans lequel les moyens de maintien agissent par effet magnétique.

7. Appareil selon la revendication 6 dans lequel les moyens de maintien magnétique comportent un aimant (39) arrangé pour attirer mutuellement le plat et le support de plat,

8. Appareil selon la revendication 7 dans lequel l'aimant s'étend sensiblement parallèlement à l'axe (24) de pivotement du support de plat et est solidaire de ce dernier.

9. Appareil selon l'une quelconque des revendications 4 à 8 dans lequel le support de plat comporte deux parties (25, 26) s'étendant sensiblement le long de deux plans formant un dièdre et solidarisées sensiblement le long de l'axe de pivotement.

10. Système de préparation de sandwich (50) qui comporte un appareil selon l'une quelconque des revendications 4 à 9 et plusieurs supports (10) identiques de garniture de sandwich (50), chaque support (10) présentant une base rectangulaire plane allongée prolongée par deux rebords, une face de cette base plane étant revêtue d'un matériau favorisant le glissement de la garniture, tel que du PTFE.

11. Système selon la revendication 10, dans lequel les plats (10) servant de supports de garniture présentent une base réalisée dans un matériau magnétique.

12. Système selon la revendication 11 dans lequel le matériau magnétique est un acier inoxydable ferritique.

## Patentansprüche

1. Verfahren zur Zubereitung eines belegten Brotes durch Einfügen eines Belags zwischen zwei Teile eines Brot- oder Teigstückes, **dadurch gekennzeichnet, dass**
- ein Belag (53 bis 55) auf eine Belaghalterplatte (10) gelegt wird,
- die belegte Platte auf einen kippbaren Plattenhalter (23, 26) gesetzt wird, der mit einem Vordrücker (25) oder einem Griff (37, 38) versehen ist und Haltemittel (39) zum Festhalten der Platte auf dem Plattenhalter aufweist, wenn dieser letzgenannte gekippt wird,
- der obere (51) und der untere Teil (52) des Brot- oder Teigstückes beiderseits der Kippachse (24) des Plattenhalters angesetzt werden, und
- der Vordrücker bzw. der Griff betätigt wird, um den Plattenhalter und die Platte in Richtung eines zu belegenden Raumes (56) zu kippen (58), der vom genannten oberen und unteren Teil des Brot- oder Teigstückes begrenzt wird, bis eine Neigung der Platte erreicht wird, geeignet, das Herabgleiten des Belages von der Platte, unter Festhalten der Platte auf dem Plattenhalter durch die Haltemittel, in den zu belegenden Raum zu bewirken.

2. Verfahren nach Patentanspruch 1, in dem zur Betätigung des Vordrückers mit Hilfe eines Teils (52) des Brot- oder Teigstückes ein Druck (57) ausgeübt wird.

3. Verfahren nach irgendeinem der Patentansprüche 1 oder 2, in dem der Neigungswinkel der Platte relativ zur im Wesentlichen horizontalen Ausgangsstellung, der zur Übergabe des Belages erforderlich ist, in einem Bereich von ungefähr 45 Grad bis ungefähr 180 Grad liegt.

4. Gerät (21) zum Belegen von Broten (50) durch Einfügen eines heterogenen Belags, der auf einem Träger (10) angeordnet ist und übereinander gestapelte Stücke fester Lebensmittel unterschiedlicher Beschaffenheit aufweist, zwischen zwei Teile eines Brot- oder Teigstückes, **dadurch gekennzeichnet, dass** es umfasst:
- einen Sockel (22),
- einen Plattenhalter (23, 26) zur Aufnahme einer Platte (10), die den Belag (53 bis 55) trägt und zwischen einer im Wesentlichen horizontalen und einer geneigten Stellung kippbar auf dem Sockel angebracht ist, und
- einen Vordrücker (25) oder einen Griff (37, 38), der am kippbaren Plattenhalter befestigt ist,
wobei der Plattenhalter Haltemittel (39) zum Festhalten der Platte auf dem Halter, wenn dieser geneigt ist, aufweist.

5. Gerät nach Patentanspruch 4, in dem der Plattenhalter relativ zum Sockel um eine im Wesentlichen horizontale Achse (24) kippbar angebracht ist.

6. Gerät nach irgendeinem der Patentansprüche 4 oder 5, in dem die Haltemittel durch Magnetismus wirken.

7. Gerät nach Patentanspruch 6, in dem die magnetischen Haltemittel einen Magneten (39) aufweisen, der derart angeordnet ist, dass er gleichzeitig die Platte und den Plattenhalter anzieht.

8. Gerät nach Patentanspruch 7, in dem sich der Magnet im Wesentlichen parallel zur Kippachse (24) des Plattenhalters erstreckt und an diesem letztgenannten befestigt ist.

9. Gerät nach irgendeinem der Patentansprüche 4 bis 8, in dem der Plattenhalter zwei Teile (25, 26) umfasst, die im Wesentlichen längs zweier Ebenen verlaufen, die einen Dieder bilden, und im Wesentlichen längs der Kippachse fest verbunden sind.

10. System zur Zubereitung belegter Brote (50), das ein Gerät nach irgendeinem der Patentansprüche 4 bis 9 und mehrere Träger (10) umfasst, die eine ebene, rechteckige, längliche Grundplatte aufweisen, die sich in zwei Randleisten fortsetzt, wobei eine Seite dieser Grundplatte mit einem Werkstoff wie etwa PTFE beschichtet ist, der das Gleiten des Belags fördert.

11. System nach Patentanspruch 10, in dem die Platten (10), die als Belagträger dienen, eine Grundplatte aufweisen, die aus einem magnetischen Werkstoff besteht.

12. System nach Patentanspruch 11, in dem der magnetische Werkstoff ein ferritischer Edelstahl ist.

## Claims

1. A method of preparing a sandwich by introducing a filling between two portions of a piece of bread or dough product, the method being **characterized by**:
placing a filling (53 to 55) on a filling support dish (10) ;
placing the dish with the filling on a tilting dish support (23, 26) fitted with a pusher (25) or a handle (37, 38) and including retaining means (39) for retaining the dish on the dish support when the dish support is tilted;
engaging the top and bottom portions (51, 52) of the piece of bread or dough product on either side of the pivot axis (24) of the dish support; and
actuating the pusher or the handle to cause the dish support to tilt (58) together with the dish towards a space (56) for filling as defined by said top and bottom portions of the piece of bread or dough product so as to obtain an angle of inclination for the dish that is suitable for causing the filling to slide off the dish into the space for filling, while retaining the dish on the dish support by the retaining means.

2. A method according to claim 1, in which, in order to actuate the pusher, thrust (57) is exerted via a portion (52) of the piece of bread or dough product.

3. A method according to claim 1 or 2, in which the angle of inclination of the dish, relative to a substantially horizontal initial position, that is required to cause the filling to slide off the dish lies in a range extending from about 45° to about 180°.

4. A device (21) for filling sandwiches (50) by introducing a non-uniform filling placed on a support (10) and comprising a pile of solid pieces of food of various kinds, between two portions of a piece of bread or dough product, the device being **characterized in that** it comprises:
a base (22);
a dish support (23, 26) arranged to receive a dish (10) carrying a filling (53 to 55) and pivotally mounted on the base to pivot between a substantially horizontal position and an inclined position; and
a pusher (25) or a handle (37, 38) secured to the pivoting dish support;
the dish support including retaining means (39) for retaining the dish on the dish support when the dish support is tilted.

5. A device according to claim 4, in which the dish support is mounted to pivot relative to the base about an axis (24) that is substantially horizontal.

6. A device according to anyone of claims 4 or 5, in which the retaining means act by a magnetic effect.

7. A device according to claim 6, in which the magnetic retaining means comprise a magnet (39) arranged to attract the dish and the dish support towards each other.

8. A device according to claim 7, in which the magnet extends substantially parallel to the pivot axis (24) of the dish support and is secured thereto.

9. A device according to anyone of claims 4 to 8, in which the dish support comprises two portions (25, 26) extending substantially along two planes forming a dihedral angle and secured to each other substantially along the pivot axis.

10. A system for preparing a sandwich (50), the system including a device according to anyone of claims 4 to 9 and a plurality of identical filling supporting dishes (10), each filling supporting dish comprising an elongate plane rectangular base extended by two rims, and wherein a face of the plane base is covered in a material for encouraging the filling to slide, such as PTFE.

11. A system according to claim 10 wherein the filling supporting dishes (10) comprise a basemade of a magnetic material.

12. A system according to claim 11, in which the magnetic material is a ferritic stainless steel.
